# EUROPEAN PATENT APPLICATION

(11) **EP 4 489 452 A1**
(43) Date of publication of application: **08.01.2025**
(21) Application number: 23781316.7
(22) Date of filing: 28.03.2023
(51) Int. Cl.: H04W 8/08, H04W 60/04, H04W 84/06

(54) **METHOD FOR CONTROLLING TERMINAL AND AMF FOR COMMUNICATING WITH SATELLITE RAN, AND DEVICE THEREOF**

(30) Priority: 29.03.2022 KR 20220039248
(71) Applicant: Samsung Electronics Co., Ltd., Suwon-si, Gyeonggi-do 16677 (KR)
(72) Inventor: SUH, Kyungjoo, Suwon-si, Gyeonggi-do 16677 (KR)
(74) Representative: Gulde & Partner
(86) International application number: PCT/KR2023/004131
(87) International publication number: WO 2023/191461

(57) **Abstract**

The present disclosure relates to a 5G or 6G communication system for supporting higher data transmission rates. Provided is a method for controlling an access and mobility management function (AMF) for communicating with a satellite radio access network (RAN), the method comprising the operation of: receiving a non access stratum (NAS) message, which is received from a terminal and includes first location information about the terminal, and a next generation application protocol (NG-AP) message, which is received from the terminal and includes second location information about the terminal; requesting user data management (UDM) for location information about the terminal on the basis of the first location information and the second location information; and receiving the location information about the terminal from the UDM and transmitting same to the terminal.

## Description

### [Technical Field]

The disclosure relates to a device and method for supporting the mobility of a UE when using satellite communication in a wireless communication system. Specifically, the disclosure relates to a method and device for controlling an AMF and a UE communicating with a satellite RAN.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

When a UE uses satellite communication in a mobility context, the coverage of a satellite covers various coverages depending on the type of the satellite unlike general 5G new radio (NR) small cells. Accordingly, a method for processing UE registration is required, considering the mobility of the UE.

### [Detailed Description of the Invention]

### [Technical Problem]

The disclosure relates to a device and method for supporting the mobility of a UE when using satellite communication in a wireless communication system.

Specifically, the disclosure proposes a method for processing UE registration for mobility of the UE as the satellite coverage varies depending on the type of the satellite unlike conventional 5G NR cells when the satellite communication is used in the situation where the UE moves. Thus, the disclosure provides a method and device for managing the mobility of the UE using the NAS when the satellite RAN is used in 5G mobile communication.

### [Technical Solution]

The disclosure provides a method for controlling an access and mobility management function (AMF) communicating with a satellite radio access network (RAN), the method comprising: receiving, from a user equipment (UE), a non access stratum (NAS) message including first location information about the UE and a next generation application protocol (NG-AP) message including second location information about the UE, requesting, from a user data management (UDM), location information about the UE based on the first location information and the second location information, and receiving the location information about the UE from the UDM and transmitting the location information about the UE to the UE.

The disclosure provides an access and mobility management function (AMF) device communicating with a satellite radio access network (RAN), comprising a transceiver and a processor controlling the transceiver, wherein the processor is configured to: receive a non access stratum (NAS) message including first location information about a UE and a next generation application protocol (NG-AP) message including second location information about the UE, request, from a user data management (UDM), location information about the UE based on the first location information and the second location information, and receive the location information about the UE from the UDM and transmit the location information about the UE to the UE.

The disclosure provides a method for communication of a UE communicating with a satellite radio access network (RAN), comprising generating a NAS message including first location information about the UE, generating a radio resource control (RRC) message including second location information about the UE to transmit a next generation application protocol (NG-AP) message, matching the first location information included in the NAS message and the second location information included in the RRC message, and transmitting, to an access and mobility management function (AMF), the NAS message and the RRC message.

The disclosure provides a UE communicating with a satellite radio access network (RAN), comprising a transceiver and a processor controlling the transceiver, wherein the processor is configured to: generating a NAS message including first location information about the UE, generating a radio resource control (RRC) message including second location information about the UE to transmit a next generation application protocol (NG-AP) message, matching the first location information included in the NAS message and the second location information included in the RRC message, and transmitting, to an access and mobility management function (AMF), the NAS message and the RRC message.

### [Advantageous Effects]

By the method and device according to the disclosure, when a UE served by a satellite RAN having wider coverage than a 5G cell or an LTE cell moves and relocates, inconsistency in location information transmitted to an AMF may be prevented and, despite inconsistency in location information transmitted to the AMF, the UE may be successfully registered.

### [Brief Description of the Drawings]

FIG. 1A illustrates a UE and a network environment for performing wireless communication in an environment where 5G communication and satellite communication are supported according to an embodiment of the disclosure;
FIG. 1B illustrates a UE and a network environment for performing wireless communication in an environment where 5G communication and satellite communication are supported according to an embodiment of the disclosure;
FIG. 2 is a flowchart illustrating a procedure for performing communication using a NAS message in an environment where 5G communication and satellite communication are supported according to an embodiment of the disclosure;
FIG. 3 is a flowchart illustrating a procedure for performing communication using a NAS message in an environment where 5G communication and satellite communication are supported according to an embodiment of the disclosure;
FIG. 4 is a flowchart illustrating a procedure for performing communication using a NAS message in an environment where 5G communication and satellite communication are supported according to an embodiment of the disclosure;
FIG. 5 is a view illustrating a control method of an AMF according to an embodiment of the disclosure;
FIG. 6 is a view illustrating a control method of a UE according to an embodiment of the disclosure;
FIG. 7 is a view illustrating a configuration of a UE according to an embodiment; and
FIG. 8 is a view illustrating a configuration of a network entity according to an embodiment.

### [Mode for Carrying out the Invention]

Hereinafter, embodiments of the disclosure are described in detail with reference to the accompanying drawings. In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments, a "...unit" may include one or more processors.

As used herein, terms for identifying access nodes, terms denoting network entities, terms denoting messages, terms denoting inter-network entity interfaces, and terms denoting various pieces of identification information are provided as an example for ease of description. Thus, the disclosure is not limited to the terms, and the terms may be replaced with other terms denoting objects with equivalent technical meanings.

For ease of description, the terms and names defined in the 3rd generation partnership project long term evolution (3GPP LTE) and/or 3GPP NR standards, or terms and names modified based thereupon may be used herein. However, the disclosure is not limited by such terms and names and may be likewise applicable to systems conforming to other standards. According to the disclosure, the base station may be an entity allocating a resource to the UE and may be at least one of a gNode B, gNB, eNode B, eNB, Node B, BS, radio access network (RAN), next generation-RAN (NG-RAN), base station controller, or node on network. The base station may provide network access to UE(s) in an LTE system or NR system. For convenience of description, eNB and gNB may be used interchangeably. In other words, the base station described as an eNB may represent a gNB. The term UE herein may refer to mobile phones, narrow band (NB)-IoT devices, sensors, as well as other wireless communication devices.

The description of embodiments of the disclosure focuses primarily on 3GPP communication standards, but the subject matter of the disclosure may also be applicable to other communication systems with a similar technical background with minor changes without significantly departing from the scope of the present invention, and this may be so performed by the determination of those skilled in the art to which the disclosure pertains.

In 5G or NR systems, the access and mobility management function (AMF) which is a manager entity for managing the mobility of the UE and the session management function (SMF) which is an entity for managing the session are separated. Accordingly, unlike in the 4G LTE communication system, where the mobility management entity (MME) performs both mobility management and session management, in the 5G or NR system, an entity performing mobility management and an entity performing session management are separated as the AMF and the SMF, respectively, so that the communication method and communication management method between the UE and the network entity have been changed.

For non 3GPP access in the 5G or NR system, mobility management and session management, respectively, may be performed through the AMF and the SMF, via the non-3GPP inter-working function (N3IWF). Further, security-related information which is a critical factor in mobility management may be processed through the AMF.

When the UE uses satellite communication in the mobility context, since the satellite covers various coverages depending on its type unlike general 5G NR cells (or small cells), a method for processing UE registration for UE mobility is required.

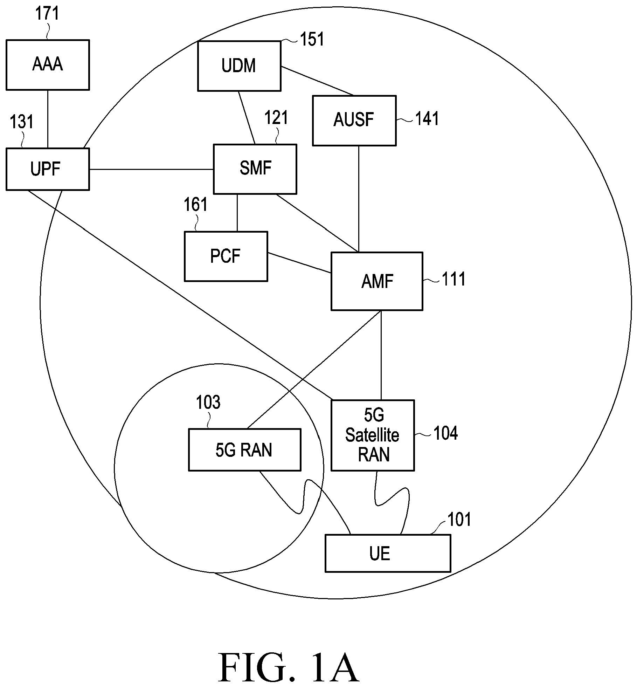

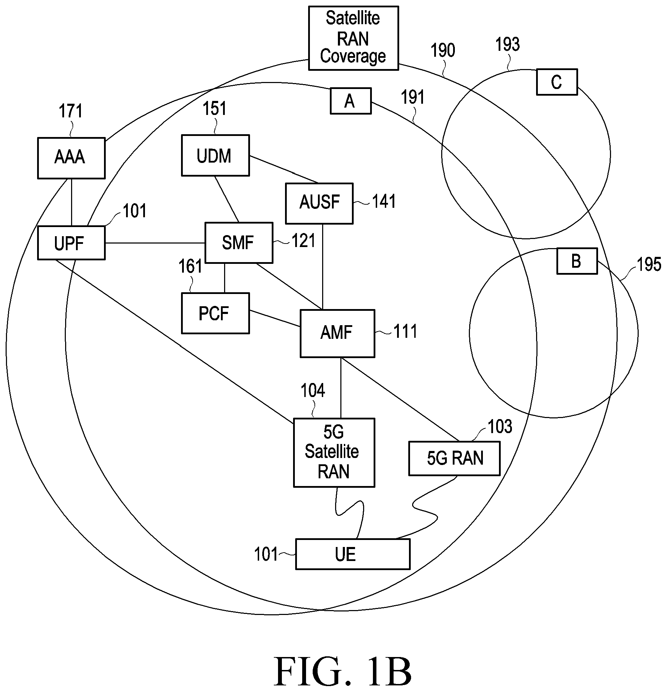

In 5G cells or LTE cells, the area covered by the 5G NR or LTE base station was limited. Accordingly, the AMF or MME could be aware of the location of the UE based on the 5G NR base station or LTE base station, and when the UE performs a registration request, it could know the last visited tracking area (TA) of the UE. However, as 5G adopted satellites as an access type, the cell coverage reached, e.g., to several tens of or several hundreds of kilometers depending on the of the satellite. As shown in FIGS. 1A and 1B, the coverage of the satellite RAN accessed by the UE reaches one country or a larger area including its neighboring country.

As the satellite RAN coverage increases, the location information (e.g., last TAI) of the UE on the move without handover between base stations may not reflect the actual location of the UE. Further, in the situation where each country has different mobile communication operators, questions may be raised as to whether it is appropriate to provide a network access service without subscribing to roaming service with a UE which has moved to another country.

For this reason, when the UE performs registration based on the current TA and the previously registered TA, it is required to register the UE so that the base station or AMF is aware of the precise location of the UE. However, no specific procedure for when a UE attempts to register via a satellite RAN has been defined in the prior art.

Further, the location information about the UE included in a registration request message transferred from the UE to the AMF may differ depending on the scheme in which the registration request message is transmitted. For example, the scheme in which the registration request message is transmitted may include a first scheme in which the message is transferred from the UE to the AMF through a non access stratum (NAS) layer, and a second scheme in which the message is transmitted through an access stratum (AS) layer from the UE to the RAN (radio resource control (RRC) message section) and through an NG-AP layer from the RAN to the AMF (NG-AP section). In the first scheme, the registration request message includes the last visited tracking area identity (or last TAI) as location information about the UE and may be transferred, as it is, without change in the RAN. Meanwhile, in the second scheme, the RAN may also include the actual location information about the UE known to the RAN in the registration request message (not the last visited TAI) in the NG-RAN application protocol (NG-AP) message section and transmit the same. Therefore, the location information about the UE included in the registration request message may not match depending on the transmission scheme. Here, NG-AP refers to an application protocol to support signaling between satellite RAN and AMF.

Accordingly, the disclosure proposes a method and device for addressing a location information mismatch of a UE that may occur when registering the UE with an NAS message by adopting satellite access for the 5G system. Thus, the disclosure provides a method and device for managing the mobility of a UE using a NAS when satellite access is used in 5G wireless communication.

FIGS. 1A and 1B illustrate a UE and a network environment for performing wireless communication in an environment where 5G communication and satellite communication are supported according to an embodiment of the disclosure.

In particular, FIG. 1B illustrates a situation in which the coverage 190 of a satellite RAN 104 covers the territory 191 of country A, the territory 195 of country B, and the territory 193 of country C. For example, even when a UE 101 communicating in country A moves to the territory 195 of country B, the UE 101 may be within the coverage of the satellite RAN 104 and may also be able to access and register with the communication network through the satellite RAN 104. For reference, detailed information included in the system information (e.g., SIB1) that the UE 101 receives from the satellite RAN 104 may differ depending on the area where the UE is located. For example, the tracking area code (TAC) included in SIB1 may differ when the UE 101 is located in country A and when it is located in country B.

Referring to FIGS. 1A and 1B, a 5G or NR core network may include network functions (NFs) such as a user plane function (UPF) 131, a session management function (SMF) 121, an access and mobility management function (AMF) 111, a 5G radio access network (RAN) 103, a user data management (UDM) 151, and a policy control function (PCF) 161. Further, for authenticating the entities, entities such as the authentication server function (AUSF) 141 and the authentication, authorization, and accounting (AAA) 171 may be included in the 5G or NR core network.

The AMF 111 is an entity for managing access and mobility of the UE 101. As an example, the AMF 111 may perform such functions as registration of the UE 101, connection, reachability, mobility management, access identification/authentication, and mobility event generation.

The SMF 121 may perform a management function for a protocol data unit (PDU) session of the UE 101. For example, the SMF 121 may perform such network functions as session management functions of establishing, modifying, or releasing a session and maintaining a tunnel between the UPF 131 and the RAN 104 necessary therefor, the functions of allocating and managing an Internet protocol (IP) address of the UE 101, selection and control of the user plane, control of traffic processing on the UPF 131, and billing data gathering control.

The UPF 131 serves to process data of the UE 101 and may play a role to transfer the data transmitted from the UE 101 to an external network or process the data to allow the data introduced from the external network to be transferred to the UE 101. For example, the UPF 131 may perform network functions, such as acting as an anchor between radio access technologies (RATs), packet routing and forwarding, packet inspection, application of user plane policy, creating a traffic usage report, or buffering.

The UDM 151 performs functions, such as generating authentication information for 3GPP security, processing the user ID, managing a list of network functions (NFs) supporting the UE 101, and managing subscription information.

The PCF 161 is an NF that manages operator policy information for providing a service in the 5G system.

The UE (user equipment or terminal) 101 may access the 5G core network through the 5G base station (5G RAN) 103. Meanwhile, an N3 interworking function (N3IWF) may be present for the UE to communicate through non 3GPP access. When communication is performed through non 3GPP access, the session management may be controlled by the UE 101, non 3GPP access, N3IWF, and SMF 121, and mobility management of non 3GPP access is controlled by the UE 101, non 3GPP access, N3IWF, and AMF 111.

As described above, in the 4G LTE system, the MME is in charge of mobility management and session management. In the 5G system, the entities for performing mobility management and session management are separated into the AMF 111 and the SMF 121, respectively. Meanwhile, the 5G system is considering a standalone (SA) deployment structure that communicates only with 5G entities and a non stand alone (SA) deployment structure that uses 4G entities and 5G entities together.

Referring to FIGS. 1A and 1B, such a deployment may be possible where when the UE 101 communicates with the network, the control of the UE 101 is performed by the base stations 103 and 104, and the 5G network entity of the core network is used. In such a case, the mobility management between the UE 101 and the AMF 111 and the session management between the UE 101 and the SMF 121 may be performed on a non access stratum (NAS) layer which is called layer 3.

The communication network on which the disclosure is based assumes a 5G NR or 4G LTE network. However, the same concept may also be applied to other systems within the category which may be understood by one of ordinary skill in the art.

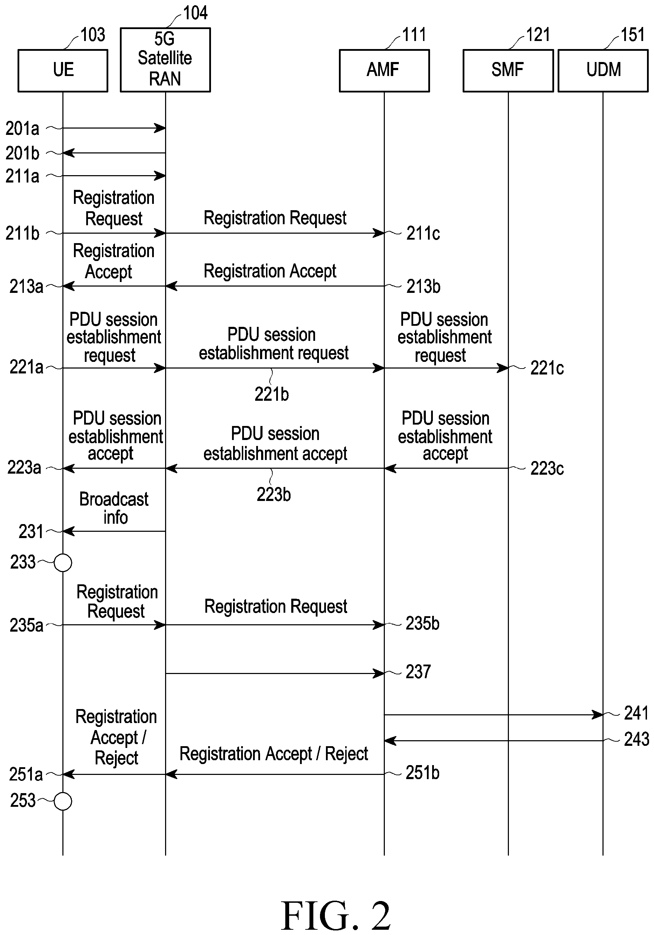

FIG. 2 is a view illustrating a procedure for performing communication using a NAS message in an environment where 5G communication and satellite communication are supported according to an embodiment of the disclosure.

FIG. 2 illustrates an example in which location information about the UE 101 transferred through an NAS message from the UE 101 to the AMF 111 and location information about the UE 101 transferred through an AS layer from the UE 101 to the satellite RAN 104 (i.e., an RRC section) and transferred through an NG-AP message from the satellite RAN 104 to the AMF 111 (NG-AP section) are different from each other during a UE registration process. In the present embodiment, the location information about the UE 101, the location information that the UE 101 may utilize in the next registration, or the current location information about the UE 101 may be transferred to the UE 101 through a registration accept message. Here, the transmission from the UE 101 to the AMF 111 through the NAS message is to transfer the NAS message from the UE to the AMF 111 through the satellite RAN. On the other hand, the transmission of the message in the NG-AP section is that the satellite RAN 104 generates an NG-AP message and transmits the NG-AP message from the NG-RAN (i.e., the satellite RAN 104) to the AMF 111.

Accordingly, in the embodiment of FIG. 2, when the location information (referred to as 'first location information') about the UE 101 transferred to the AMF 111 via the NAS message and the location information (referred to as 'second location information') about the UE 101 transferred from the UE 101 to the satellite RAN 104 via the AS layer and transferred from the satellite RAN 104 to the AMF 111 via the NG-AP section are different from each other, the AMF 111 may provide appropriate location information to the UE 101 through a registration accept message or registration reject message and perform a registration procedure.

In step 201a, the UE 101 may transmit an RRC connection request message to the 5G satellite RAN 104. The RRC connection request message is a message transmitted to establish an RRC connection when the UE in an idle state responds to, e.g., a call attempt, a data transmission attempt, or paging.

In step 201b, the UE 101 may receive an RRC connection setup message which is a response message from the 5G satellite RAN 104. The RRC connection setup message is transmitted when the 5G satellite RAN 104 accepts the connection request of the UE 101.

The UE 101 may perform the following process in relation to selecting a public land mobile network (PLMN). The PLMN may be identified by a mobile country code (MCC) and a mobile network code (MNC). The PLMN information about the cell serviced by the satellite RAN 104 may be included in system information (e.g., system information block 1 (SIB1)) and broadcast. When the UE 101 is powered on, the UE 101 may search for an available PLMN from the system information and select an appropriate PLMN from which it may receive a service. The NAS layer protocol stack of the UE 101 may notify the AS layer protocol stack that it is necessary to select a PLMN. The AS layer protocol stack of the UE 101 may search for a corresponding band and notify the NAS layer protocol stack of the PLMN list. The NAS layer protocol stack of the UE 101 may select a PLMN to be accessed from the PLMN list.

211a may be an RRC message transmitted from the UE 101 to the 5G satellite RAN 104, and one NAS message may be transmitted from the UE 101 to the AMF 111 (i.e., in a section between the UE 101 and the AMF 111) by the RRC message 211a. Here, although the NAS message is divided into two sections 211b and 211c to represent the 5G satellite RAN 104 involved in transmitting the NAS message, it is noted that the NAS message is transferred to the AMF 111 as it is from the UE 101 through the 5G satellite RAN.

In step 211a, the UE 101 may transmit an RRC connection setup complete message to the 5G satellite RAN 104, and the UE 101 transitions to an RRC connection mode. Specifically, a registration request message, which is a type of NAS message, may be transmitted by the RRC message (e.g., RRC connection setup complete message) 211a, a registration request message, which is a type of NAS message, may be included in the RRC message 211a, or a registration request message, which is a type of NAS message, may be piggy-backed or concatenated with the RRC message 211a and transmitted. By so doing, the UE 101 may send a registration request message, which is a NAS message, to the AMF 111 (211b and 211c).

In steps 213a and 213b, the AMF 111 may send a registration accept message to the UE 101.

In steps 221a, 221b, and 221c, the UE 101 may transmit a PDU session establishment request message to the SMF 121 via the AMF 111.

In steps 223a, 223b, and 223c, the UE 101 may receive a PDU session establishment accept message from the SMF 121 via the AMF 111 and may perform data communication.

The UE 101 may move while performing data communication, and the coverage of the 5G satellite RAN 104 may be wider than the area covered by the AMF 111. As the coverage of the 5G satellite RAN 104 is wider than the coverage of the cell of the 5G RAN or the cell of the LTE, when the UE 101 moves and registers, the exact current location of the UE 101 and the location (e.g., Last TAI) stored in the UE 101 may not match. The location information transmitted as an information element (IE) in the registration request message, which is a type of NAS message, may be location information (e.g., Last TAI) stored in the UE. Accordingly, when the UE 101 transmits the location information to the AMF 111 via the 5G satellite RAN 104, the location information included in the NAS message transmitted by the UE 101 to the AMF 111 via the 5G satellite RAN 104 may not match the location information transmitted from the 5G satellite RAN 104 to the AMF 111. The present embodiment is to address the mismatch of the location information about the UE 101 through the following procedure.

In step 231, the UE 101 may receive information broadcast from the 5G satellite RAN 104 through a system information block (SIB).

In step 233, the UE 101 may store the received SIB information.

In steps 235a and 235b, the UE 101 may send a registration request message, which is a type of NAS message, to the AMF 111. The registration request message may be transmitted when it is determined that the UE 101 has moved or every predetermined period. The registration request message may be transmitted through the NG-AP period 237, via the RRC message section 235a and. There may be a mismatch between the location information about the UE 101 included in the NG-AP message 237 received by the AMF 111 in the NG-AP section and the location information included in the registration request NAS message received by the AMF 111 in the NAS message 235b. Alternatively, the message 237 of the NG-AP section may not be a registration request message, but may be another message including location information about the UE 101, transmitted by the 5G satellite RAN 104.

When such a mismatch occurs, in step 241, the AMF 111 may request information such as the tracking area (TA) that the UE 101 may access and register, from the UDM 151.

In step 235, the registration request message transmitted by the UE 101 to the AMF 111 may include the following information. In other words, the location information included by the UE 101 in the registration request message may be included in the form of an information element (IE) or a parameter, and examples of the information are as follows.

For example, the location information may be location information that is included in the registration accept or registration reject message received by the UE 101 in the previous registration request and is based on the location information stored by the UE 101. Examples of the location information may include at least one of the following information.

-Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

The AMF 111 that receives the registration request message from the UE 101 may, in an embodiment, store the corresponding location information, verify the corresponding location information, receive the location information from the UDM 151 as in steps 241 and 243 below, or store the information received from the UDM 151. Meanwhile, as an embodiment, the AMF 111 may transmit, to the UE 101, e.g., location information that may be registered by the UE 101, location information that may not be registered by the UE 101, current location information about the UE 101, or location information where registration of the UE 101 is recommended, based on the information received from the UDM 151, the information received from the UE 101, and the information stored in the AMF 111.

In step 243, the UDM 243 may inform the AMF 111 of location information where the UE 101 may access and register based on the subscription information about the UE 101.

In steps 251a and 251b, the location information capable of access and registration by the UE 101 may be transmitted from the AMF 111 to the UE 101. For example, the location information capable of access and registration by the UE 101 may be transmitted to the UE 101 through a registration accept message or a registration reject message. In steps 251a and 251b, the location information (e.g., at least one of the MCC, MNC, or TAC) about the UE 101, current location information, or location information recommended for access or registration may be transmitted to the UE 101. In this case, the location information transmitted to the UE 101 may include location information allowed to the UE 101 and based on the subscription information about the UE 101 (e.g., TA or TA list information allowed to the UE 101 for registration), location information recommended to the UE 101 for access (e.g., recommended TA or TA list information recommended to the UE 101 for registration or access), and location information based on the current location information about the UE 101 (e.g., the TA or TA list information based on the current location of the UE 101). The location information may be TA-based location information.

In other words, the location information transmitted to the UE 101 through the registration accept message or the registration reject message may be included in the form of an information element (IE) or parameter, and examples of the information are as follows.

For example, the location information may be location information that is included in the registration accept or registration reject message received by the UE 101 in the previous registration request and is based on the location information stored by the UE 101. Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

In step 253, the UE 101 may store the location information (e.g., at least one of the MCC, MNC, or TAC) about the UE 101, current location information, or location information recommended for access or registration, transmitted to the UE 101 in steps 251a and 251b. The stored information may be used in the next registration procedure of the UE 101.

In other words, the UE 101 may store the corresponding location information received from the AMF 111. The UE 101 may perform a registration procedure using the location information that may be registered by the UE 101, the location information that should not be registered by the UE 101, the current location information about the UE 101, or the location information recommended for registration of the UE 101, based on the information received from the AMF 111 or may include the location information in the registration request message requested by the UE 101.

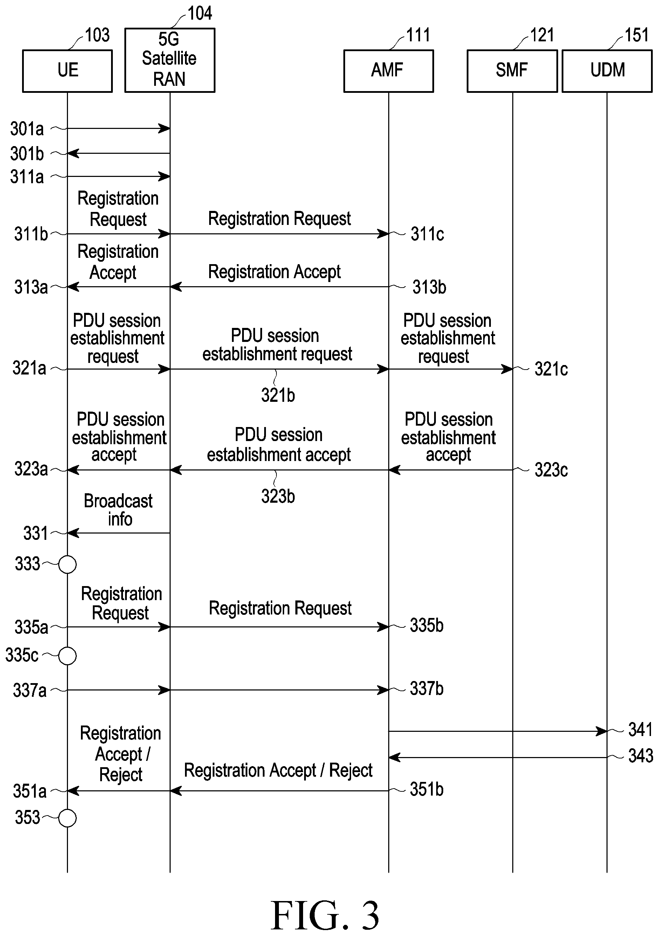

FIG. 3 is a view illustrating a procedure for performing communication using a NAS message in an environment where 5G communication and satellite communication are supported according to an embodiment of the disclosure.

The embodiment of FIG. 3 proposes a scheme for preventing a mismatch between location information about the UE 101 transmitted through an NAS message from the UE 101 to the AMF 111 and location information about the UE 101 transferred through an AS layer from the UE 101 to the satellite RAN 104 (i.e., an RRC section) and an NG-AP layer from the satellite RAN 104 to the AMF 111 (NG-AP section) are different from each other during a UE registration process. Specifically, in the present embodiment, the location information (e.g., last TAI) about the UE 101 and the current location information about the UE 101 may be transferred to the AMF 111 through the RRC message and the NG-AP message, as well as the registration request message which is a NAS message. As the information is transmitted via two ways, the location information about the UE 101 transferred through NAS and the location information about the UE 101 transferred through AS layer and NG-AP may be prevented from differing from each other.

Accordingly, in the embodiment of FIG. 3, the UE 101 may match the location information (referred to as 'first location information') about the UE 101 transferred to the AMF 111 via the NAS message and the location information (referred to as 'second location information') about the UE 101 transferred from the UE 101 to the satellite RAN 104 via the AS layer and transferred from the satellite RAN 104 to the AMF 111 via the NG-AP section and transfer the location information about the UE 101 to the AMF 111 through two ways to register the UE 101.

In step 301a, the UE 101 may transmit an RRC connection request message to the 5G satellite RAN 104. The RRC connection request message is a message transmitted to establish an RRC connection when the UE in an idle state responds to a call attempt, a data transmission attempt, or paging.

In step 301b, the UE 101 may receive an RRC connection setup message which is a response message from the 5G satellite RAN 104. The RRC connection setup message is transmitted when the 5G satellite RAN 104 accepts the connection request of the UE 101.

The UE 101 may perform the following process in relation to selecting a PLMN. The PLMN may be identified with an MNC and an MNC. The PLMN information about the cell serviced by the satellite RAN 104 is included in system information (e.g., system information block 1 (SIB1)) and broadcast. When the UE 101 is powered on, the UE 101 may search for an available PLMN from the system information and select an appropriate PLMN from which it may receive a service. The NAS layer protocol stack of the UE 101 notifies the AS layer protocol stack that PLMN selection is required. The AS layer protocol stack of the UE 101 may search for a corresponding band and notify the NAS layer protocol stack of the PLMN list. The NAS layer protocol stack of the UE 101 may select a PLMN to be accessed from the PLMN list.

311a may be an RRC message transmitted from the UE 101 to the 5G satellite RAN 104, and one NAS message may be transmitted from the UE 101 to the AMF 111 (i.e., in a section between the UE 101 and the AMF 111) by the RRC message 311a. Here, although the NAS message is divided into two sections 311b and 311c to represent the 5G satellite RAN 104 involved in transmitting the NAS message, it is noted that the NAS message is transferred to the AMF 111 as it is from the 5G satellite RAN (without change to the included information).

In step 311a, the UE 101 may transmit an RRC connection setup complete message to the 5G satellite RAN 104, and the UE 101 transitions to an RRC connection mode. Specifically, a registration request message, which is a type of NAS message, may be transmitted by the RRC message (e.g., RRC connection setup complete message) 311a, a registration request message, which is a type of NAS message, may be included in the RRC message 311a, or a registration request message, which is a type of NAS message, may be piggy-backed or concatenated with the RRC message 311a and transmitted. By so doing, the UE 101 may send a registration request message, which is a NAS message, to the AMF 111 (311b and 311c).

In steps 311b and 311c, the registration request message transmitted by the UE 101 to the AMF 111 may include the following information. In other words, the location information included by the UE 101 in the registration request message may be included in the form of an information element (IE) or a parameter, and examples of the information are as follows.

For example, the location information may be location information that is included in the registration accept or registration reject message received by the UE 101 in the previous registration request and is based on the location information stored by the UE 101. Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

The AMF 111 that receives the registration request message from the UE 101 may, in an embodiment, store the corresponding location information, verify the corresponding location information, receive the location information from the UDM 151 as in steps 341 and 343 below, or store the information received from the UDM 151. Meanwhile, as an embodiment, the AMF 111 may transmit, to the UE 101, e.g., location information that may be registered by the UE 101, location information that should not be registered by the UE 101, current location information about the UE 101, or location information where registration of the UE 101 is recommended, based on the information received from the UDM 151, the information received from the UE 101, and the information stored in the AMF 111.

In steps 313a and 313b, the AMF 111 may send a registration accept message to the UE 101.

In steps 321a, 321b, and 321c, the UE 101 may send a PDU session establishment request message to the SMF 121 via the AMF 111.

In steps 323a, 323b, and 323c, the UE 101 may receive a PDU session establishment accept message from the SMF 121 via the AMF 111 and may perform data communication.

The UE 101 may move while performing data communication, and the coverage of the 5G satellite RAN 104 may be wider than the area covered by the AMF 111. As the coverage of the 5G satellite RAN 104 is wider than the coverage of the cell of the 5G RAN or the cell of the LTE, when the UE 101 moves and registers, the exact current location of the UE 101 and the location (e.g., last TAI) stored in the UE 101 may not match. The location information transmitted as an IE in the registration request message, which is a type of NAS message, may be location information (e.g., Last TAI) stored in the UE. Accordingly, when the UE 101 transmits the location information to the AMF 111 via the 5G satellite RAN 104, the location information included in the NAS message transmitted by the UE 101 to the AMF 111 via the 5G satellite RAN 104 may not match the location information transmitted from the 5G satellite RAN 104 to the AMF 111. The present embodiment is to address the mismatch of the location information about the UE 101 through the following procedure.

In step 331, the UE 101 may receive information broadcast from the 5G satellite RAN 104 through an SIB.

In step 333, the UE 101 may store the received SIB information.

In steps 335a and 335b, the UE 101 may send a registration request message, which is a type of NAS message, to the AMF 111. The registration request message may be transmitted when it is determined that the UE 101 has moved or every predetermined period. The registration request message may be transmitted through an RRC section (or AS layer section) 337a and an NG-AP section 337b. As described above, a mismatch may be present between the location information about the UE 101 received by the AMF 111 through the NG-AP section 337b and the location information received through the NAS message 335a and 335b. Alternatively, the message 337a and 337b of the NG-AP section may not be a registration request message, but may be another message including location information about the UE 101, transmitted by the 5G satellite RAN 104.

To prevent such a mismatch, in step 335c, it is possible to match the location information about the UE 101 transferred in the AS layer section 337a and the NG-AP section 337b and the location information about the UE 101 transferred in the NAS section 335a and 335b. For example, the matching location information may be the current location information about the UE 101 or may be the last TAI stored in the UE 101. Although step 335c is illustrated as being performed after steps 335a and 335b in FIG. 3, step 335c may be performed before, or simultaneously with, steps 335a and 335b. In another embodiment, the NAS messages of steps 335a and 335b may be transmitted piggybacked or concatenated with the NG-AP messages of steps 337a and 337b, so that matching location information may be transmitted in the messages. In another embodiment, the NAS messages of steps 335a and 335b may be transmitted through the AS layer section and the NG-AP section, and additional messages may be transmitted in steps 337a and 337b to verify the location information about the UE transmitted from the AMF 111 in the AS and NAS sections.

In step 341, the AMF 111 may request location information (e.g., tracking area) where the UE 101 may access or register, from the UDM 151.

In step 343, the UDM 151 may inform the AMF 111 of location information where the UE 101 may access or register based on the subscription information about the UE 101.

In steps 351a and 351b, the accessible or registerable location information about the UE 101 may be transmitted through a registration accept message or a registration reject message transmitted from the AMF 111 to the UE 101. In steps 351a and 351b, the location information (e.g., at least one of the MCC, MNC, or TAC) about the UE 101 or location information recommended for access or registration may be transmitted to the UE 101.

In this case, the location information transmitted to the UE 101 may include location information allowed to the UE 101 and based on the subscription information about the UE 101 (e.g., TA or TA list information allowed to the UE 101 for registration), location information recommended to the UE 101 for access (e.g., recommended TA or TA list information recommended to the UE 101 for registration or access), and location information based on the current location information about the UE 101 (e.g., the TA or TA list information based on the current location of the UE 101). The location information may be TA-based location information.

In other words, the location information transmitted to the UE 101 through the registration accept message or the registration reject message may be included in the form of an information element (IE) or parameter, and examples of the information are as follows.

Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

In step 353, the UE 101 may store the transmitted location information (e.g., at least one of the MCC, MNC, or TAC) about the UE 101 or location information recommended for access or registration. The stored information may be used in the next registration procedure of the UE 101.

In other words, the UE 101 may store the corresponding location information received from the AMF 111. The UE 101 may perform a registration procedure using the location information that may be registered by the UE 101, the location information that should not be registered by the UE 101, the current location information about the UE 101, or the location information recommended for registration of the UE 101, based on the information received from the AMF 111 or may include the location information in the registration request message requested by the UE 101.

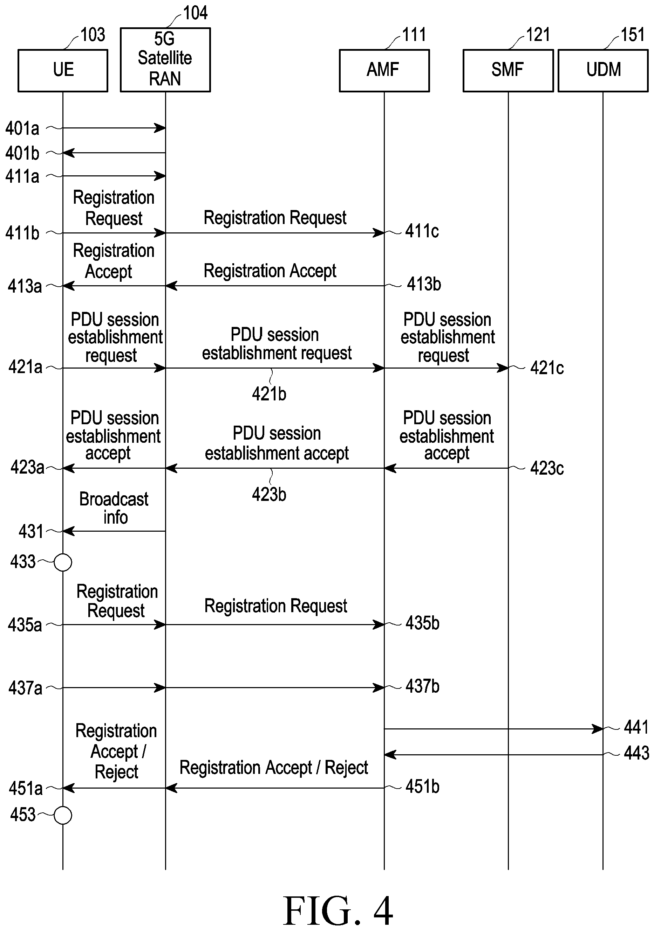

FIG. 4 is a view illustrating a procedure for performing communication using a NAS message in an environment where 5G communication and satellite communication are supported according to an embodiment of the disclosure.

During a UE registration process in the embodiment of FIG. 4, location information about the UE 101 transmitted through an NAS message from the UE 101 to the AMF 111 and location information about the UE 101 transferred through the AS layer from the UE 101 to the satellite RAN 104 (i.e., an RRC section) and an NG-AP layer from the satellite RAN 104 to the AMF 111 (NG-AP section) are transferred in duplicate in the registration request message. In other words, the present embodiment is a scheme of transferring location information about the UE or current location information about the UE by transmitting the message passing through the RRC section and NG-AP section and the NAS message via two ways. As such, information may be transmitted via two ways, and the AMF 111 may verify the location information transmitted via the two ways. When there is location information recommended by the network (available to the UE during registration), the AMF 111 may transfer the recommended location information to the UE 101 through a registration accept message.

Accordingly, in the embodiment of FIG. 4, the UE transfers the location information about the UE 101 (referred to as 'first location information') to the AMF 111 through the NAS message and transfers the location information about the UE 101 via the AS layer from the UE 101 to the satellite RAN 104 and through the NG-AP section from the satellite RAN 104 to the AMF 111. Further, the AMF 111 may verify the location information sent from the UE 101. The verification process of the AMF 111 may be omitted. Further, the AMF 111 may transmit the registerable location information about the UE 101 based on the subscription information about the UE 101 or the mobile communication operator's policy to the UE 101 through a registration accept message.

In step 401a, the UE 101 may transmit an RRC connection request message to the 5G satellite RAN 104. The RRC connection request message is a message transmitted to establish an RRC connection when the UE in an idle state responds to a call attempt, a data transmission attempt, or paging.

Referring to step 401b, the UE 101 may receive an RRC connection setup message which is a response message from the 5G satellite RAN 104. The RRC connection setup message is transmitted when the 5G satellite RAN 104 accepts the connection request of the UE 101.

The UE 101 may perform the following process in relation to selecting a PLMN. The PLMN may be identified with an MNC and an MNC. The PLMN information about the cell serviced by the satellite RAN 104 is included in system information (e.g., system information block 1 (SIB1)) and broadcast. When the UE 101 is powered on, the UE 101 may search for an available PLMN from the system information and select an appropriate PLMN from which it may receive a service. The NAS layer protocol stack of the UE 101 notifies the AS layer protocol stack that PLMN selection is required. The AS layer protocol stack may search for a corresponding band and notify the NAS layer protocol stack of the PLMN list. The NAS layer protocol stack of the UE 101 may select a PLMN to be accessed from the PLMN list.

411a may be an RRC message transmitted from the UE 101 to the 5G satellite RAN 104, and one NAS message may be transmitted from the UE 101 to the AMF 111 (i.e., in a section between the UE 101 and the AMF 111) by the RRC message 411a. Here, although the NAS message is divided into two sections 411b and 411c to represent the 5G satellite RAN 104 involved in transmitting the NAS message, it is noted that the NAS message is transferred to the AMF 111 as it is from the 5G satellite RAN (without change to the included information).

In step 411a, the UE 101 may transmit an RRC connection setup complete message to the 5G satellite RAN 104, and the UE 101 transitions to an RRC connection mode. Specifically, a registration request message, which is a type of NAS message, may be transmitted by the RRC message (e.g., RRC connection setup complete message) 411a, a registration request message, which is a type of NAS message, may be included in the RRC message 411a, or a registration request message, which is a type of NAS message, may be piggy-backed or concatenated with the RRC message 411a and transmitted. By so doing, the UE 101 may send a registration request message, which is a NAS message, to the AMF 111 (411b and 411c).

In steps 411b and 411c, the registration request message transmitted by the UE 101 to the AMF 111 may include the following information. In other words, the location information included by the UE 101 in the registration request message may be included in the form of an information element (IE) or a parameter, and examples of the information are as follows.

For example, the location information may be location information that is included in the registration accept or registration reject message received by the UE 101 in the previous registration request and is based on the location information stored by the UE 101. Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

The AMF 111 that receives the registration request message from the UE 101 may, in an embodiment, store the corresponding location information, verify the corresponding location information, receive the location information from the UDM 151 as in steps 441 and 443 below, or store the information received from the UDM 151. Meanwhile, as an embodiment, the AMF 111 may transmit, to the UE 101, e.g., location information that may be registered by the UE 101, location information that should not be registered by the UE 101, current location information about the UE 101, or location information where registration of the UE 101 is recommended, based on the information received from the UDM 151, the information received from the UE 101, and the information stored in the AMF 111.

In steps 413a and 413b, the AMF 111 may send a registration accept message to the UE 101.

In steps 421a, 421b, and 421c, the UE 101 may send a PDU session establishment request message to the SMF 121 via the AMF 111.

In steps 423a, 423b, and 423c, the UE 101 may receive a PDU session establishment accept message from the SMF 121 via the AMF 111 and may perform data communication.

The UE 101 may move while performing data communication, and the coverage of the 5G satellite RAN 104 may be wider than the area covered by the AMF 111. Meanwhile, as the coverage of the 5G satellite RAN 104 is wider than the coverage of the cell of the 5G RAN or the cell of the LTE, when the **UE 101** moves and registers, the exact current location of the UE 101 and the location (e.g., last TAI) stored in the UE 101 may not match. The location information transmitted as an IE in the registration request message, which is a type of NAS message, may be location information (e.g., Last TAI) stored in the UE. Accordingly, when the UE 101 transmits the location information to the AMF 111 via the 5G satellite RAN 104, the location information included in the NAS message transmitted by the UE 101 to the AMF 111 via the 5G satellite RAN 104 may not match the location information transmitted from the 5G satellite RAN 104 to the AMF 111. The present embodiment is to prevent the mismatch of the location information about the UE 101 through the following procedure.

In step 431, the UE 101 may receive information broadcast from the 5G satellite RAN 104 through an SIB.

In step 433, the UE 101 may store the received SIB information.

In steps 435a and 435b, the UE 101 may send a registration request message, which is a type of NAS message, to the AMF 111. The registration request message may be transmitted when it is determined that the UE 101 has moved or every predetermined period. The registration request message may be transmitted through an RRC section (or AS layer section) 437a and an NG-AP message section 437b. As described above, a mismatch may be present between the location information about the UE 101 received by the AMF 111 through the NG-AP section 437b and the location information received by the AMF 111 through the NAS message. Alternatively, the message 437a and 437b of the NG-AP section may not be a registration request message, but may be another message including location information about the UE 101, transmitted by the 5G satellite RAN 104.

To prevent such mismatch, the UE 101 may transmit location information through two ways, that is, a path where it is transferred in the AS layer section 437a and the NG-AP section 437b and a path where it is transferred in the NAS section 435a and 435b. In another embodiment, the NAS messages of steps 435a and 435b may be transmitted piggybacked or concatenated with the NG-AP messages of steps 437a and 437b, so that matching location information may be transmitted in the messages. In another embodiment, the NAS messages of steps 435a and 435b may be transmitted through the AS layer section and the NG-AP section, and additional messages may be transmitted in steps 437a and 437b to verify the location information about the UE transmitted from the AMF 111 in the NG-AS section and NAS section.

In step 441, the AMF 111 may request location information (e.g., tracking area) where the UE 101 may access or register, from the UDM 151.

In step 443, the UDM 151 may inform the AMF 111 of location information where the UE 101 may access or register based on the subscription information about the UE 101 or mobile communication operator's policy.

In steps 451a and 451b, the accessible or registerable location information about the UE 101 may be transmitted through a registration accept message or a registration reject message transmitted from the AMF 111 to the UE 101. In steps 451a and 451b, the location information (e.g., at least one of the MCC, MNC, or TAC) about the UE 101, current location information, or location information recommended for access or registration may be transmitted to the UE 101.

In this case, the location information transmitted to the UE 101 may include location information allowed to the UE 101 and based on the subscription information about the UE 101 (e.g., TA or TA list information allowed to the UE 101 for registration), location information recommended to the UE 101 for access (e.g., recommended TA or TA list information recommended to the UE 101 for registration or access), and location information based on the current location information about the UE 101 (e.g., the TA or TA list information based on the current location of the UE 101). The location information may be TA-based location information.

In other words, the location information transmitted to the UE 101 through the registration accept message or the registration reject message may be included in the form of an information element (IE) or parameter, and examples of the information are as follows.

Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

In step 453, the UE 101 may store the transmitted location information (e.g., at least one of the MCC, MNC, or TAC) about the UE 101, current location information, or location information recommended for access or registration. The stored information may be used in the next registration procedure of the UE 101.

In other words, the UE 101 may store the corresponding location information received from the AMF 111. The UE 101 may perform a registration procedure using the location information that may be registered by the UE 101, the location information that should not be registered by the UE 101, the current location information about the UE 101, or the location information recommended for registration of the UE 101, based on the information received from the AMF 111 or may include the location information in the registration request message requested by the UE 101.

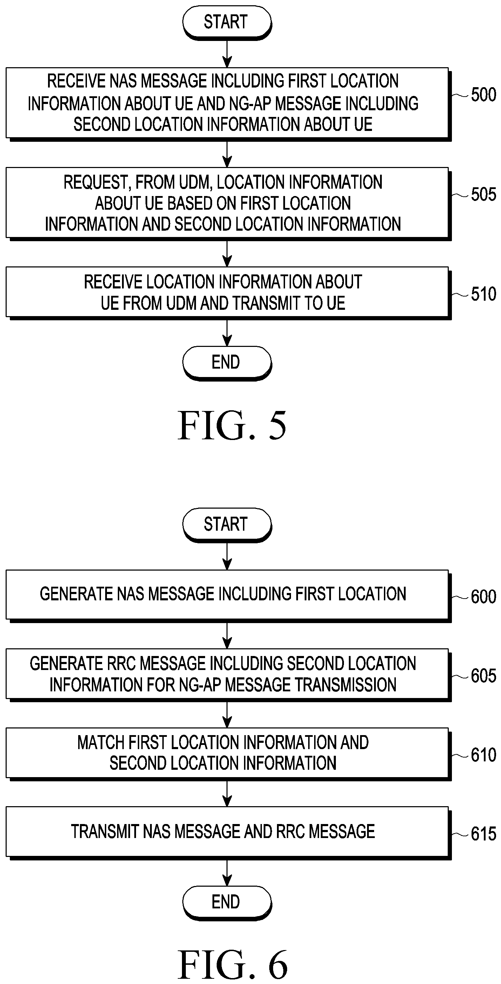

FIG. 5 is a view illustrating a control method of an AMF according to an embodiment of the disclosure.

The AMF control method described in FIG. 5 is described with reference to the operation of the AMF illustrated in FIG. 2.

The AMF 111 may receive an NAS message including first location information and an NG-AP message including second location information about the UE 101 from UE 101 (500). The NAS message may be a registration request message.

The AMF 111 may request location information about the UE from the UDM 151 based on the location information (i.e., first location information) about the UE included in the NAS message and the location information (i.e., second information) about the UE included in the NG-AP message. Specifically, the AMF 111 may request location information about the UE from the UDM when the first location information and the second location information do not match.

The AMF 111 that receives the registration request message from the UE 101 may, in an embodiment, store the corresponding location information, verify the corresponding location information, receive the location information from the UDM 151 as in steps 441 and 443 below, or store the information received from the UDM 151. Meanwhile, as an embodiment, the AMF 111 may transmit, to the UE 101, e.g., location information that may be registered by the UE 101, location information that should not be registered by the UE 101, current location information about the UE 101, or location information where registration of the UE 101 is recommended, based on the information received from the UDM 151, the information received from the UE 101, and the information stored in the AMF 111.

The AMF 111 may receive the location information about the UE from the UDM and transmit the same to the UE 101 (510). In this case, the AMF 111 may transmit the location information received from the UDM to the UE through a registration accept message or a registration reject message.

In this case, the location information transmitted to the UE 101 may include location information allowed to the UE 101 and based on the subscription information about the UE 101 (e.g., TA or TA list information allowed to the UE 101 for registration), location information recommended to the UE 101 for access (e.g., recommended TA or TA list information recommended to the UE 101 for registration or access), and location information based on the current location information about the UE 101 (e.g., the TA or TA list information based on the current location of the UE 101). The location information may be TA-based location information.

In other words, the location information transmitted to the UE 101 through the registration accept message or the registration reject message may be included in the form of an information element (IE) or parameter, and examples of the information are as follows.

For example, the location information may be location information that is included in the registration accept or registration reject message received by the UE 101 in the previous registration request and is based on the location information stored by the UE 101. Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

FIG. 6 is a view illustrating a control method of a UE according to an embodiment of the disclosure.

The UE control method described in FIG. 6 is described with reference to the operation of the UE illustrated in FIG. 3.

The UE 101 may generate a NAS message including first location information about the UE (600). The UE 101 may store the corresponding location information received from the AMF 111. The UE 101 may perform a registration procedure using the location information that may be registered by the UE 101, the location information that should not be registered by the UE 101, the current location information about the UE 101, or the location information recommended for registration of the UE 101, based on the information received from the AMF 111 or may include the location information in the registration request message requested by the UE 101.

In this case, the location information included by the UE 101 may be location information that is included in the registration accept or registration reject message received by the UE 101 in the previous registration request and is based on the location information stored by the UE 101. The location information may be in the form of an IE or parameter and may include at least one of the following information:
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

The UE 101 may generate an RRC message including second location information about the UE (605). The RRC message is a message used when the satellite RAN 104 transmits an NG-AP message to the AMF 111, and the location information included in the RRC message may be used. The NAS message may be a registration request message. The NG-AP message may include location information about the UE 101.

When the first location information and the second location information do not match, the UE 101 may perform an operation for matching them (610).

The UE 101 may transmit the NAS message and RRC message including the matching location information (615). The UE may further perform an operation of receiving, from the AMF, a registration accept message or a registration reject message including the location information about the UE. The location information about the UE received from the AMF may be obtained from the user data management (UDM).

In this case, the location information received by the UE 101 may include location information allowed to the UE 101 and based on the subscription information about the UE 101 (e.g., TA or TA list information allowed to the UE 101 for registration), location information recommended to the UE 101 for access (e.g., recommended TA or TA list information recommended to the UE 101 for registration or access), and location information based on the current location information about the UE 101 (e.g., the TA or TA list information based on the current location of the UE 101). The location information may be TA-based location information.

In other words, the location information transmitted to the UE 101 through the registration accept message or the registration reject message may be included in the form of an information element (IE) or parameter, and examples of the information are as follows.

For example, the location information may be location information that is included in the registration accept or registration reject message received by the UE 101 in the previous registration request and is based on the location information stored by the UE 101. Examples of the location information may include at least one of the following information.
- Location information (e.g., TA or TA list information allowed to the UE 101 for registration) allowed to the UE 101 based on the subscription information about the UE 101.

Last visited TAI information
- Location information (e.g., TA or TA list information based on the current location of the UE 101) based on the current location information about the UE. The location information may be TA-based location information.
- Location information where access by the UE 101 is recommended (e.g., recommended TA or TA list information where registration or access is recommended for the UE 101)
- Location information except for information stored in a forbidden list not allowed to the UE 101 for access (e.g., PLMN except for those in the forbidden list, TA or TA list except for those in the forbidden list)
- Location information list (forbidden list) where access or registration of the UE 101 is forbidden (PLMN forbidden for registration, TA or TA list forbidden for registration)

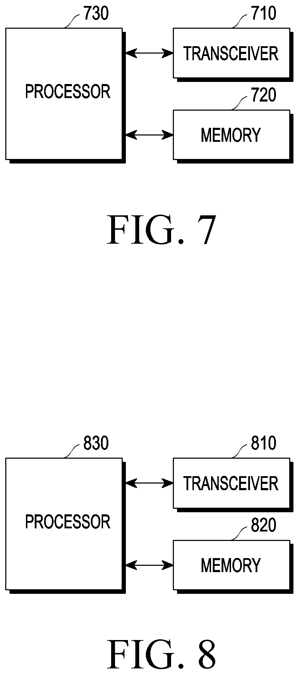

FIG. 7 is a view illustrating a configuration of a UE according to an embodiment.

As shown in FIG. 7, a UE of the disclosure may include a transceiver 710, memory 720, and a processor 730. The processor 730, transceiver 710, and memory 720 of the UE may be operated according to the above-described UE communication method. However, the components of the UE are not limited thereto. For example, the UE may include more or fewer components than the above-described components. The processor 730, the transceiver 710, and the memory 720 may be implemented in the form of a single chip.

The transceiver 710 collectively refers to the transmitter of the UE and the receiver of the UE and may transmit and receive signals to/from the base station or various network entities. The signals transmitted/received with the base station may include control information and data. To that end, the transceiver 710 may include a radio frequency (RF) transmitter for frequency-up converting and amplifying signals transmitted and an RF receiver for low-noise amplifying signals received and frequency-down converting the frequency of the received signals. However, this is merely an example of the transceiver 710, and the components of the transceiver 710 are not limited to the RF transmitter and the RF receiver. Further, the transceiver 710 may include a wired/wireless transceiver and may include various components for transmitting/receiving signals. The transceiver 710 may receive signals via a radio channel, output the signals to the processor 730, and transmit signals output from the processor 730 via a radio channel. Further, the transceiver 710 may receive the communication signal and output it to the processor and transmit the signal output from the processor to various network entities through the wired/wireless network.

The memory 720 may store programs and data necessary for the operation of the UE. The memory 720 may store control information or data that is included in the signal obtained by the UE. The memory 720 may include a storage medium, such as ROM, RAM, hard disk, CD-ROM, and DVD, or a combination of storage media.

The processor 730 may control a series of processes for the UE to be able to operate according to the above-described embodiments. The processor 730 may include at least one processor. For example, the processor 730 may include a communication processor (CP) that performs control for communication and an application processor (AP) that controls an upper layer, such as an application program.

FIG. 8 is a view illustrating a configuration of a network entity according to an embodiment.

As shown in FIG. 8, a network entity of the disclosure may include a transceiver 810, memory 820, and a processor 830. The processor 830, transceiver 810, and memory 820 of the network entity may operate according to the above-described communication methods by the network entity. However, the components of the network entity are not limited thereto. For example, the network entity may include more or fewer components than the above-described components. The processor 830, the transceiver 810, and the memory 820 may be implemented in the form of a single chip. The network entity may include network functions (NFs), such as the access and mobility management function (AMF), session management function (SMF), policy control function (PCF), network exposure function (NEF), unified data management (UDM), and user plane function (UPF), as described above. The network entity may include a base station.

The transceiver 810 collectively refers to the receiver of the network entity and the transmitter of the network entity and may transmit and receive signals to/from a UE or another network entity. In this case, the signals transmitted/received with the base station may include control information and data. To that end, the transceiver 810 may include a radio frequency (RF) transmitter for frequency-up converting and amplifying signals transmitted and an RF receiver for low-noise amplifying signals received and frequency-down converting the frequency of the received signals. However, this is merely an example of the transceiver 810, and the components of the transceiver 810 are not limited to the RF transmitter and the RF receiver. The transceiver 810 may include a wired/wireless transceiver and may include various components for transmitting/receiving signals. Further, the transceiver 810 may receive signals via a communication channel (e.g., a radio channel), output the signals to the processor 830, and transmit signals output from the processor 830 via a radio channel. Further, the transceiver 810 may receive the communication signal and output it to the processor and transmit the signal output from the processor to the UE or network entity through the wired/wireless network.

The memory 820 may store programs and data necessary for the operation of the network entity. Further, the memory 820 may store control information or data that is included in the signal obtained by the network entity. The memory 820 may include a storage medium, such as ROM, RAM, hard disk, CD-ROM, and DVD, or a combination of storage media.

The processor 830 may control a series of processes for the network entity to be able to operate according to the above-described embodiments. The processor 830 may include at least one processor. The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in memory constituted of a combination of all or some thereof. As each constituting memory, multiple ones may be included.

The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for controlling an access and mobility management function (AMF) communicating with a satellite radio access network (RAN), the method comprising:
receiving, from a user equipment (UE), a non access stratum (NAS) message including first location information about the UE and a next generation application protocol (NG-AP) message including second location information about the UE;
requesting, from a user data management (UDM), location information about the UE based on the first location information and the second location information; and
receiving the location information about the UE from the UDM and transmitting the location information about the UE to the UE.

2. The method of claim 1, wherein the NAS message comprises a registration request message.

3. The method of claim 1, wherein requesting comprises:
requesting the location information about the UE from the UDM if the first location information and the second location information do not match each other.

4. The method of claim 1, wherein the location information about the UE received from the UDM is transmitted through a registration accept message or a registration reject message.

5. The method of claim 4, wherein the location information about the UE included in the registration accept message or the registration reject message includes a forbidden list forbidding the UE from accessing or registering.

6. An access and mobility management function (AMF) device communicating with a satellite radio access network (RAN), comprising:
a transceiver; and
a processor controlling the transceiver, wherein the processor is configured to:
receive a non access stratum (NAS) message including first location information about a UE and a next generation application protocol (NG-AP) message including second location information about the UE, request, from a user data management (UDM), location information about the UE based on the first location information and the second location information, and receive the location information about the UE from the UDM and transmit the location information about the UE to the UE.

7. The AMF device of claim 6, wherein the NAS message comprises a registration request message.

8. The AMF device of claim 6, wherein the processor is configured to request the location information about the UE from the UDM if the first location information and the second location information do not match each other.

9. The AMF device of claim 6, wherein the location information about the UE received from the UDM is transmitted through a registration accept message or a registration reject message.

10. The AMF device of claim 9, wherein the location information about the UE included in the registration accept message or the registration reject message includes a forbidden list forbidding the UE from accessing or registering.

11. A method for communication of a UE communicating with a satellite radio access network (RAN), the method comprising:
generating a NAS message including first location information about the UE;
generating a radio resource control (RRC) message including second location information about the UE to transmit a next generation application protocol (NG-AP) message;
matching the first location information included in the NAS message and the second location information included in the RRC message; and
transmitting, to an access and mobility management function (AMF), the NAS message and the RRC message.

12. The method of claim 11, wherein the NAS message comprises a registration request message.

13. The method of claim 11, further comprising:
receiving, from the AMF, a registration accept message or a registration reject message including location information about the UE.

14. The method of claim 13, wherein the location information about the UE included in the registration accept message or the registration reject message includes a forbidden list forbidding the UE from accessing or registering.

15. A UE communicating with a satellite radio access network (RAN), comprising:
a transceiver; and
a processor controlling the transceiver, wherein the processor is configured to:
generating a NAS message including first location information about the UE, generating a radio resource control (RRC) message including second location information about the UE to transmit a next generation application protocol (NG-AP) message, matching the first location information included in the NAS message and the second location information included in the RRC message, and transmitting, to an access and mobility management function (AMF), the NAS message and the RRC message.
